# EUROPEAN PATENT APPLICATION

(11) **EP 1 488 865 A1**
(43) Date of publication of application: **22.12.2004**
(21) Application number: 03076903.8
(22) Date of filing: 18.06.2003
(51) Int. Cl.: B21C 37/06, B21C 37/09, B21C 37/15, B23K 35/30, F16L 9/16

(54) **Double walled metal tube, metal band and strip, and method of coating a metal strip**

(71) Applicant: Hille & Müller GmbH, 40589 Düsseldorf,NRW (DE)
(72) Inventor: Boehmer, Peter Arthur, 54313 Zemmer (DE); Junkers, Dieter Otto Paul, 54298 Aach (DE)
(74) Representative: Kruit, J., Ir.

(57) **Abstract**

The invention relates to a double walled metal tube comprising a tubular roll formed metal band having a brazing layer between the metal layers of the tubular roll formed metal band, wherein the brazing layer consists of a copper alloy.

According to the invention, the copper alloy is a copper-tin alloy, wherein the copper-tin alloy contains 3 - 12 wt% tin.

The invention also relates to a metal band for forming such a double walled metal tube and to a metal strip for producing such metal bands, and to a method of coating a metal band and strip.

## Description

The present invention relates to a double walled metal tube comprising a tubular roll formed metal band having a brazing layer between the metal layers of the tubular roll formed metal band. The invention also relates to a metal band wherein a coating layer is present on at least one side of the metal band for brazing the metal band and to a metal strip wherein a coating layer is present on at least one side of the metal strip, and to a method of coating the metal strip. The term metal band is used here to indicate a narrow strip, cut from a normal (wide) strip usually having a width of 500 mm or more.

Double walled metal tubes that are made of a tubular roll formed metal band having a brazing layer between the metal layers of the tubular roll formed metal band are well known and are mainly used for brake lines of motor vehicles; other applications are for example hydraulic tubes or refrigerator tubes. Such double walled metal tubes possess two layers of metal and are manufactured from a flat metal band that is provided on at least one side with a brazing layer. The metal band is roll formed and subsequently brazed. As brazing material in the automotive industry copper is used, because copper has a melting point of 1081° C, so the brazing temperature in the brazing apparatus and the brazing time can be controlled well. The metal of the tube usually is mild steel, having a composition of 0.03 - 0.07 % C, ≤ 0.02 % P, ≤ 0.015 % S, ≤ 0.06 % Si, 0.05 - 0.4 % Mn, 0.02 - 0.07 % Al (all percentage in weight), the remainder Fe and unavoidable impurities. An additional corrosion-preventing coating is often applied over the brazed double walled tube.

In US patent 5,553,640, which is focused on double walled tubes of stainless steel, it is proposed to use a brazing layer having a lower melting point to reduce the risk of grain boundary diffusion and to increase the corrosion resistance of the material. The brazing layer according to this patent is a copper alloy comprising 13 to 15 % tin or 32.5 to 37 % zinc or 15 to 18 % silver. These amounts of tin, zinc and silver have been chosen to get a brazing temperature in the vicinity of the eutectic point so as to achieve the greatest possible reliability for producing the brazing connection.

These copper alloys however each have their disadvantages. The copper-tin alloy has a brazing temperature of 800 - 820° C. The copper-zinc alloy has a brazing temperature just above 900° C. The copper-silver alloy has a brazing temperature below 1000° C. Due to the used alloys and the brazing temperatures, the strength of these alloys is lower than the strength of pure copper as brazing layer. The automotive industry has not used these alloys for producing double walled metal tubes for brake lines in view of the lower strength, the cost for implementing these alloys and the potential risk associated with changing a long established, proven process.

It is an object of the present invention to provide a double walled metal tube for brake lines of motor vehicles and the like, that is easier and more economical to manufacture than the presently produced double walled tubes. It is also an object of the invention to provide such a tube that is acceptable for the automotive industry. Moreover, a metal band and strip and a manufacturing method for such a strip are provided.

According to a first aspect of the invention there is provided a double walled metal tube comprising a tubular roll formed metal band having a brazing layer between the metal layers of the tubular roll formed metal band, wherein the brazing layer consists of a copper alloy, the copper alloy being a copper-tin alloy, wherein the copper-tin alloy comprises 3 - 12 wt% tin.

A double walled metal tube with a brazing layer of a copper-tin alloy comprising 3 - 12 wt% tin has a lower melting point than the brazing layer of pure copper, which means that the brazing temperature in the apparatus for producing the tubes can be lower and the length of tube produced per minute can be higher. This is an economical advantage for the automotive industry. On the other hand, the percentage tin in the brazing alloy is rather low. With this percentage tin, the brazing seam strength requirements posed by the automotive industry are met. Moreover, because the percentage tin is low, the modification of the brazing process for the double walled tubes will allow the use of the existing brazing devices. It will be understood that tin is the main alloying element in the copper-tin alloy, but that small amounts of other elements could be present.

Preferably, in the double walled tube the copper-tin alloy comprises 6 - 8 wt% tin. A tin percentage between 6 and 8 provides a considerable reduction of the brazing temperature, whereas at the same time the strength of the brazed tube is well above the minimum required strength.

According to a most preferred embodiment the double walled metal tube has a brazing layer of copper-tin alloy comprising essentially 7 wt% tin. This percentage tin is deemed to give an optimum for the requirements of both low brazing temperature and high strength of the brazing layer. The brazing temperature is below 1000° C.

Preferably, the metal band of the double walled metal tube is made of steel. The preferred steel for brake lines for motor vehicles is mild steel, for instance a mild steel having a composition of 0.03 - 0.07 % C, ≤ 0.02 % P, ≤ 0.015 %S, ≤ 0.06 % Si, 0.05 - 0.4 % Mn, 0.02 - 0.07 % Al (all percentage in weight), the remainder Fe and unavoidable impurities. However, stainless steel is also possible in view of the lower brazing temperature, which reduces the risk of grain boundary diffusion.

According to a preferred embodiment of the double walled metal tube the metal band from which the tube has been roll formed has a coating of a nickel layer on one side. This has the advantage that a corrosion resistant layer is present on the tube, either on the inside or on the outside of the tube, depending on the way the metal band has been roll formed. For double walled metal tubes to be used in brake lines for automotive purposes, the nickel layer is preferably present on the outside of the tube. For double walled metal tubes to be used in fuel lines for automotive purposes the nickel layer is preferably present on the inside of the tube.

According to a second aspect of the invention there is provided a metal band, the metal band having a width of essentially 20 - 80 mm, wherein a coating layer is present on at least one side of the metal band for brazing the metal band, the coating layer being a copper-tin alloy, wherein the copper-tin alloy comprises 3 - 12 wt% tin. This metal band can be used for producing the double walled tube according to the first aspect of the invention.

Preferably, the copper-tin alloy layer on the metal band comprises 6 - 8 wt% tin, preferably essentially 7 wt% tin. This percentage tin in the alloy is optimal for producing a double walled tube.

According to a preferred embodiment of the metal band, the copper-tin alloy layer is present on both sides of the metal band, the copper-tin alloy layer preferably having a thickness of 0.5 - 5 µm on each side, more preferably 3 - 5 µm on one side and 0.5 - 1.5 µm on the other side, and still more preferably about 4 µm on one side and about 1 µm on the other side. The metal strip with these copper-tin alloy layers can easily be brazed when roll formed into a double walled metal tube.

According to another preferred embodiment, the metal band has a coating of a nickel layer on one side of the metal band, preferably a nickel layer having a thickness of 0.5 - 2 µm on one side of the metal band and a copper-tin alloy layer having a thickness of 3 - 5 µm on the other side of the metal band. This metal band provides a band that can easily be brazed when roll formed into a double walled metal tube using the copper-tin alloy layer, and at the same time provides a corrosion resistant layer on the outside or the inside of the formed tube using the nickel layer.

Preferably the metal band consists of steel, preferably mild steel, the mild steel preferably having a composition of 0.03 - 0.07 % C, ≤ 0.02 % P, ≤ 0.015 % S, ≤ 0.06 % Si, 0.05 - 0.4 % Mn, 0.02 - 0.07 % Al (all percentage in weight), the remainder Fe and unavoidable impurities. Mild steel is usually preferred for double walled tubes for brake lines, but stainless steel could also be used.

According to a third aspect of the invention there is provided a metal strip, wherein a coating layer for brazing purposes is present on at least one side of the metal strip, the coating layer being a copper-tin alloy, wherein the copper-tin alloy comprises 3 - 12 wt% tin. This strip can be used for making metal bands for producing double walled metal tubes according to the first aspect of the invention.

Preferably, the copper-tin alloy of the coating on the metal strip comprises 6 - 8 wt% tin, preferably essentially 7 wt% tin. This percentage is optimal for the production of double walled metal tubes for brake lines for automotive applications.

According to a preferred embodiment, the copper-tin alloy layer is present on both sides of the metal strip, the copper-tin alloy layer preferably having a thickness of 0.5 - 5 µm on each side, more preferably 3 - 5 µm on one side and 0.5 - 1.5 µm on the other side, and still more preferably about 4 µm on one side and about 1 µm on the other side. The bands cut from this strip can easily be brazed when roll formed into a double walled metal tube.

According to another preferred embodiment, the metal strip has a coating of a nickel layer on one side of the metal strip, preferably a nickel layer having a thickness of 0.5 - 2 µm on one side of the metal strip and a copper-tin alloy layer having a thickness of 3 - 5 µm on the other side of the metal strip. This metal strip can be cut into bands that are easily brazeable when roll formed into a double walled metal tube using the copper-tin alloy layer, and at the same time provide a corrosion resistant layer on the outside or the inside of the formed tube using the nickel layer.

According to a fourth aspect of the invention, there is provided a method of coating a metal strip with a coating layer consisting of a copper-tin alloy comprising the following steps:
- cleaning the metal strip;
- activating the surface of the metal strip;
- continuously coating at least one side of the metal strip with a copper-tin alloy layer comprising 3 -12 wt% tin;
- posttreating the metal strip (e.g. applying an anti-oxidising agent).
The continuous coating of the metal strip with a coating layer of a copper-tin alloy comprising 3 - 12 wt% tin provides metal bands, cut from this metal strip, that can be used for making double walled tubes for brake lines for motor vehicles according to the first aspect of the invention.

Preferably, the metal strip is coated with a copper-tin alloy layer comprising 6 - 8 wt% tin, preferably essentially 7 wt% tin. This tin percentage is optimal for such double walled tubes. The metal of the strip does not influence the coating, but is preferably mild steel for double walled tubes for automotive purposes or for other purposes. However, the metal could also be stainless steel.

According to a preferred embodiment of the method, the metal strip is continuously coated with a layer of nickel on one side of the metal strip, preferably before the coating of the copper-tin alloy layer. The coating with a nickel layer provides a metal strip with both a nickel layer and at least one copper-tin alloy layer, which is advantageous for producing double walled metal tubes from bands cut from this strip, because in this way the tubes are provided with a corrosion preventive nickel layer.

According to a preferred method the metal band is coated using Physical Vapour Deposition (PVD). This coating method is known as such, and suitable for coating a metal strip. The coating layers can be applied as two sided coating for the copper-tin alloy layer, or as one-sided coating for the nickel coating and/or the copper-tin alloy coating. PVD is known for its environmental friendly processes and flexibility, and the cost is comparable to electroplating. The PVD coating of copper-tin alloy can be applied as one layer of copper-tin alloy, or as a separate copper and a separate tin layer that are subsequently diffusion annealed.

According to another preferred embodiment the metal band is coated using electroplating, preferably using a copper plated layer and a tin plated layer, the coated metal being subsequently annealed to produce a copper-tin alloy. The plating of layers of metal such as copper, tin and nickel is known as such and provides the desired layers on the strip.

According to still another preferred embodiment the metal band is coated with a copper-tin alloy layer in a tin ion and copper ion containing cyanide bath. The use of a copper ion and tin ion containing bath is known as such and is a suitable way to coat a metal strip with a copper-tin alloy coating.

The invention will be elucidated with the description of three examples.

### Example I

Providing cold rolled strip (dimensions 0,35 x 500 mm in cross-section);
cleaning (2 - 3 % alkaline cleaner, 1st step dip cleaner, 2nd step electro-cleaner);
cascade rinse with brushes;
activation (5% sulphuric acid);
cascade rinse;
bronze plating (7% tin) electrolytically, with a special cyanide bath, containing copper cyanide 30 to 40 g/l, sodium cyanide 50 to 60 g/I (alternatively potassium cyanide 80 to 100 g/I), sodium stannate-3-hydrate 25 to 35 g/I, sodium carbonate 50 to 80 g/I, sodium hydroxide 10 to 15 g/I, organic compounds (e.g. complex agents, grain refiner, wetter 0,5 to 1 g/I, etc.), 2,7 µm coating thickness each side;
cascade rinse plus bronze anti-oxidising dip process (last rinse section, organic azol derivate);
slitting in accordance to customer specification.

### Example II

Providing cold rolled strip (dimensions 0,35 x 500mm in cross-section);
cleaning (2 - 3 % alkaline cleaner, 1 st step dip cleaner, 2nd step electro-cleaner);
cascade rinse with brushes;
activation (5% sulphuric acid);
cascade rinse;
bronze plating (7% tin) electrolytically, with a special cyanide bath, containing copper cyanide 30 to 40 g/l, sodium cyanide 50 to 60 g/l (alternatively potassium cyanide 80 to 100 g/I), sodium stannate-3-hydrate 25 to 35 g/I, sodium carbonate 50 to 80 g/I, sodium hydroxide 10 to 15 g/I, organic compounds (e.g. complex agents, grain refiner, wetter 0,5 to 1 g/l, etc.), 2,7 µm coating thickness each side;
cascade rinse;
batch annealing under HNX atmosphere (5% hydrogen, 95 % nitrogen) at approx. 640°C for 12 hrs or continuous annealing under HNX atmosphere at approx. 900 °C for 1 min;
brushing to ensure active copper surface and the required finish;
slitting in accordance to customer specification.

### Example III

Providing cold rolled strip (dimensions 0,343 x 501 mm in cross-section);
cleaning (2 - 3 % alkaline cleaner, 1 st step dip cleaner, 2nd step electro-cleaner);
cascade rinse with brushes;
activation (5% sulphuric acid);
cascade rinse;
nickel plating electrolytically, with a standard Watt's bath, containing nickel sulphate 200 to 250 g/I, sodium chloride 20 to 40 g/I, boric acid 35 to 45 g/I, 1 µm one side, approx. <0,1 µm other side;
cascade rinsing;
bronze plating (7% tin) electrolytically, with a special cyanide bath, containing copper cyanide 30 to 40 g/I, sodium cyanide 50 to 60 g/I (alternatively potassium cyanide 80 to 100 g/I), sodium stannate-3-hydrate 25 to 35 g/I, sodium carbonate 50 to 80 g/I, sodium hydroxide 10 to 15 g/I, organic compounds (e.g. complex agents, grain refiner, wetter 0,5 to 1 g/I, etc.), 3 µm coating thickness each side;
cascade rinse plus bronze anti oxidising dip process (last rinse section, organic azol derivate);
slitting in accordance to customer specification.

## Claims

1. Double walled metal tube comprising a tubular roll formed metal band having a brazing layer between the metal layers of the tubular roll formed metal band, wherein the brazing layer consists of a copper alloy, the copper alloy being a copper-tin alloy, wherein the copper-tin alloy comprises 3 - 12 wt% tin.

2. Double walled metal tube according to claim 1, wherein the copper-tin alloy comprises 6 - 8 wt% tin.

3. Double walled metal tube according to claim 1 or 2, wherein the copper-tin alloy comprises essentially 7 wt% tin.

4. Double walled metal tube according to any one of the preceding claims, wherein the metal band is made of steel.

5. Double walled metal tube according to claim 4, wherein the steel band is made of mild steel, the mild steel preferably having a composition of 0.03 - 0.07 % C, ≤ 0.02 % P, ≤ 0.015 % S, ≤ 0.06 % Si, 0.05 - 0.4 % Mn, 0.02 - 0.07 % Al (all percentage in weight), the remainder Fe and unavoidable impurities..

6. Double walled metal tube according to any one of the preceding claims, wherein the metal band from which the tube has been roll formed has a coating of a nickel layer on one side.

7. Metal band, for instance for producing double walled metal tubes according to any one of claims 1 - 6, the metal band having a width of essentially 20 - 80 mm, wherein a coating layer is present on at least one side of the metal band for brazing the metal band, the coating layer being a copper-tin alloy, wherein the copper-tin alloy comprises 3 - 12 wt% tin.

8. Metal band according to claim 7, wherein the copper-tin alloy comprises 6 - 8 wt% tin, preferably essentially 7 wt% tin.

9. Metal band according to claim 7 or 8, wherein the copper-tin alloy layer is present on both sides of the metal band, the copper-tin alloy layer preferably having a thickness of 0.5 - 5 µm on each side, more preferably 3 - 5 µm on one side and 0.5 - 1.5 µm on the other side, and still more preferably about 4 µm on one side and about 1 µm on the other side.

10. Metal band according to claim 7 or 8, wherein the metal band has a coating of a nickel layer on one side of the metal band, preferably a nickel layer having a thickness of 0.5 - 2 µm on one side of the metal band and a copper-tin alloy layer having a thickness of 3 - 5 µm on the other side of the metal band.

11. Metal band according to any one of claims 7 - 10, wherein the metal band consists of steel, preferably mild steel, the mild steel preferably having a composition of 0.03 - 0.07 % C, ≤ 0.02 % P, ≤ 0.015 % S, ≤ 0.06 % Si, 0.05 - 0.4 % Mn, 0.02 - 0.07 % Al (all percentage in weight), the remainder Fe and unavoidable impurities.

12. Metal strip, for instance for making metal bands for producing double walled metal tubes according to any one of claims 1 - 6, wherein a coating layer for brazing purposes is present on at least one side of the metal strip, the coating layer being a copper-tin alloy, wherein the copper-tin alloy comprises 3 - 12 wt% tin.

13. Metal strip according to claim 12, wherein the copper-tin alloy comprises 6 - 8 wt% tin, preferably essentially 7 wt% tin.

14. Metal strip according to claim 12 or 13, wherein the copper-tin alloy layer is present on both sides of the metal strip, the copper-tin alloy layer preferably having a thickness of 0.5 - 5 µm on each side, more preferably 3 - 5 µm on one side and 0.5 - 1.5 µm on the other side, and still more preferably about 4 µm on one side and about 1 µm on the other side.

15. Metal strip according to claim 12, 13 or 14, wherein the metal strip has a coating of a nickel layer on one side of the metal strip, preferably a nickel layer having a thickness of 0.5 - 2 µm on one side of the metal strip and a copper-tin alloy layer having a thickness of 3 - 5 µm on the other side of the metal strip.

16. Metal strip according to any one of claims 12 - 15, wherein the metal strip consists of steel, preferably mild steel, the mild steel preferably having a composition of 0.03 - 0.07 % C, ≤ 0.02 % P, ≤ 0.015 % S, ≤ 0.06 % Si, 0.05 - 0.4 % Mn, 0.02 - 0.07 % Al (all percentage in weight), the remainder Fe and unavoidable impurities.

17. Method of coating a metal strip with a coating layer consisting of a copper-tin alloy comprising the following steps:
- cleaning the metal strip;
- activating the surface of the metal strip;
- continuously coating at least one side of the metal strip with a copper-tin alloy layer comprising 3 - 12 wt% tin;
- posttreating the metal strip (e.g. applying an anti-oxidising agent).

18. Method according to claim 17, wherein the metal strip is coated with a copper-tin alloy layer comprising 6 - 8 wt% tin, preferably essentially 7 wt% tin.

19. Method according to claim 17 or 18, herein the metal strip is continuously coated with a layer of nickel on one side of the metal strip, preferably before the coating of the copper-tin alloy layer.

20. Method according to claim 17, 18 or 19, wherein the metal band is coated using Physical Vapour Deposition (PVD), comprising the following steps:
- cleaning the metal strip;
- drying the metal strip;
- activating the metal strip;
- continuously coating at least one side of the metal strip with a copper-tin alloy layer comprising 3 -12 wt% tin;
- cooling of the coated strip;
- applying an anti-oxidising agent.

21. Method according to claim 17, 18 or 19, wherein the metal band is coated using electroplating, preferably using a copper plated layer and a tin plated layer, the coated metal being subsequently annealed to produce a copper-tin alloy.

22. Method according to claim 17, 18 or 19, wherein the metal band is coated with a copper-tin alloy layer in a tin ion and copper ion containing cyanide bath.
